# EUROPEAN PATENT SPECIFICATION

(11) **EP 3 712 588 B1**
(45) Date of publication and mention of the grant of the patent: **13.11.2024**
(21) Application number: 19305364.2
(22) Date of filing: 22.03.2019
(51) Int. Cl.: G01M 5/00

(54) **METHOD FOR DETECTING FATIGUE DAMAGE OF A HYDRAULIC UNIT, AND THE HYDRAULIC UNIT THEREOF**
VERFAHREN ZUM ERFASSEN VON SCHÄDEN AN EINER HYDRAULIK-EINHEIT UND DEREN HYDRAULIK-EINHEIT
PROCEDE DE DETECTION DE DOMMAGES PAR LA FATIGUE D'UNE UNITE HYDRAULIQUE ET SON UNITE HYDRAULIQUE

(43) Date of publication of application: 23.09.2020
(73) Proprietor: GE Renewable Technologies, 38100 Grenoble (FR)
(72) Inventor: DUPARCHY, Florian, 38041 GRENOBLE (FR); LOWYS, Pierre-Yves, 38041 GRENOBLE (FR); GUILLAUME, Renaud, 38041 Grenoble (FR); ANDRE, François, 38041 GRENOBLE (FR)
(74) Representative: Brevalex

(56) References cited:
- CN-A- 108 590 918
- JP-A- 2006 029 260
- JP-A- H07 279 813
- US-A- 4 409 841
- US-B1- 6 532 825

## Description

### TECHNICAL FIELD

The present invention concerns a method for detecting the fatigue damage of a hydraulic unit. The present invention concerns a method for detecting the fatigue damage of the hydraulic unit implementing fatigue indicators arranged for being remotely queried.

The present invention also concerns a hydraulic unit provided with fatigue indicators arranged for being remotely queried.

### PRIOR ART

When driven into rotation, for example by a stream of water, the runner of a hydraulic machine has to endure mechanical stress whose magnitude is particularly strong at specific positions, called "hot spot", notably located at the corners of the runner blades.

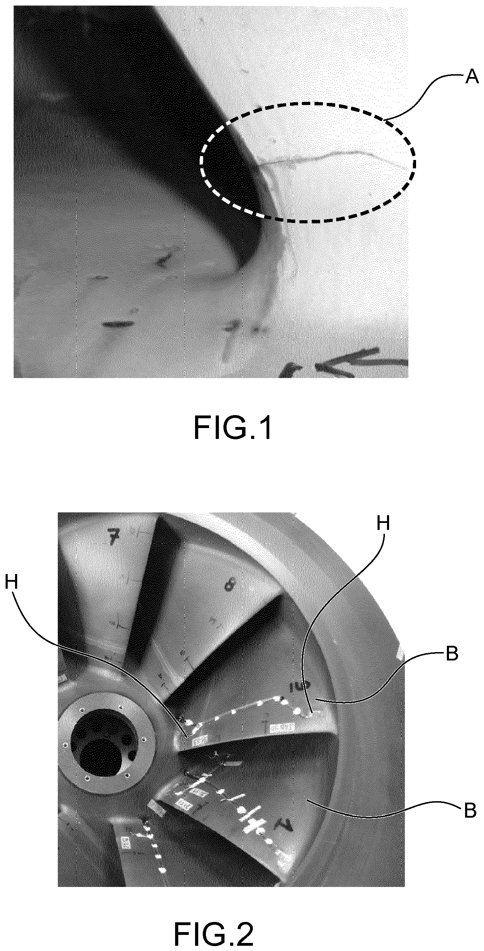

The cumulative effect of this mechanical stress generates fatigue, which may ultimately trigger the initiation and the propagation of cracks (figure 1).

The breaking and/or the release of parts of the runner resulting from the appearance of cracks may create major damages of the hydraulic machine and cause its immobilization.

This effect is not limited to the runner, and other elements of the hydraulic unit, like the shaft line, the wicket gates or the pipes, are also subject to significant mechanical strain/stress.

It is therefore paramount to be able to estimate the fatigue and the associated remaining lifetime of these components of the hydraulic unit.

For this purpose, it is generally proceeded to mechanical strain measurement campaigns.

For example in the case of the runner, said mechanical strain measurement campaigns generally involve the positioning of gauges, notably strain gauges, in particular in the vicinity of hot spots, and an analysis of data collected by said gauges in order to deduce the mechanical stress undergone at the hot spot location.

However, this method is not satisfactory.

Indeed, the analysis of the data generally requires the establishment of a hydrodynamical model of the hydraulic unit which is cumbersome to implement.

Furthermore, this sequence and the measurement campaign immobilize the hydraulic turbine under test, which is therefore not available for production. In other words, the measurement campaign generates a shortfall for the operator.

Besides, the gauges H need to be located in the very close proximity of the specific location, and notably the hot spots, for which access is not convenient. In particular, it requires a wired connection. For example, as depicted in figure 2, the gauges H are mounted on the suction side, the pressure side, on the leading edge or on the trailing edge of the blades B.

In addition, depending on the duration of the mechanical strain measurement campaign, a very limited range of operating conditions can be tested.

Finally, the cost for executing such measurement campaign is quite high.

It is therefore an object of the invention to propose a method for detecting the fatigue damage of a hydraulic unit which is not as cumbersome as known prior art methods.

It is also an object of the invention to propose a method for detecting the fatigue damage of a hydraulic unit for which release of fatigue indicators can be prevented.

The introductory portion of claims 1 and 9 is known from CN 108 590 918 A and further prior art is disclosed in JP 2006 0292 and JP H07279813.

### SUMMARY OF THE INVENTION

The aforementioned objects are, at least partly, achieved by a method for detecting a fatigue undergone on at least one specific location of a hydraulic unit according to claim 1.

According to one embodiment, the at least one fatigue indicator is/are calibrated so that they are sensitive to the fatigue undergone on the at least one specific location, optionally, the at least specific location is/are locations, called hot spot, wherein the fatigue undergone corresponds to a local maximum.

According to one embodiment, the at least one fatigue indicator, when detecting a fatigue above a predetermined threshold of fatigue, translate(s) said fatigue into a variation of a physical parameter, optionally, the physical parameter is an electrical resistance, or a counting of an accumulated strain.

According to one embodiment, the at least one fatigue indicator comprises a plate having a top face on which is located a crack gauge.

According to one embodiment, the plate comprises a pre-initiated crack that is designed to propagate below the crack gauge as soon as the predetermined threshold of fatigue is reached, optionally, the pre-initiated crack is guided in a groove formed on a bottom face of the plate opposite to the top face, and extending along a first direction.

According to one embodiment, the crack gauge comprises an electrical resistance made of conductive wires arranged perpendicularly to the first direction on the top face, and designed to selectively, advantageously successively, break depending on the magnitude of the fatigue causing the propagation of the pre-initiated crack, optionally the conductive wires are arranged along the first direction in order of increasing length.

According to one embodiment, the at least one fatigue indicator comprises a central section connecting two lateral sections, the central section being designed to break as soon as the predetermined threshold of fatigue is reached, optionally the two lateral section have a flat shape.

According to one embodiment, the method further comprises the collection of the variation of the physical parameter by a data acquisition system via a wireless connection, optionally, the operating conditions of the hydraulic unit are collected by the data acquisition system.

The invention also concerns a hydraulic unit according to independent claim 9.

According to one embodiment, the at least one fatigue indicator is/are calibrated so that they are sensitive to the fatigue undergone on the at least one specific location, optionally, the at least specific location is/are locations, called hot spot, wherein the fatigue undergone corresponds to a local maximum.

According to one embodiment, the at least one fatigue indicator is/are positioned away from the at least one specific location.

According to one embodiment, the at least one fatigue indicator is/are located on a dry surface of the hydraulic unit.

According to one embodiment, the at least one fatigue indicator, when detecting a fatigue above a predetermined threshold of fatigue, translate(s) said fatigue into a variation of a physical parameter, optionally, the physical parameter is an electrical resistance, or a counting of an accumulated strain.

According to one embodiment, the at least one fatigue indicator comprises a plate having a top face on which is located a crack gauge.

According to one embodiment, the plate comprises a pre-initiated crack that is designed to propagate below the crack gauge as soon as the predetermined threshold of fatigue is reached, optionally, the pre-initiated crack is guided in a groove formed on a bottom face of the plate opposite to the top face, and extending along a first direction.

According to one embodiment, the crack gauge comprises an electrical resistance made of conductive wires arranged perpendicularly to the first direction on the top face, and designed to selectively, optionally successively, break depending on the magnitude of the fatigue causing the propagation of the pre-initiated crack, optionally the conductive wires are arranged along the first direction in order of increasing length.

According to one embodiment, the at least one fatigue indicator comprises a central section connecting two lateral sections, the central section being designed to break as soon as the predetermined threshold of fatigue is reached, optionally the two lateral section have a flat shape.

According to one embodiment, the method further comprises the collection of the variation of the physical parameter by a data acquisition system via a wireless connection, optionally, the operating conditions of the hydraulic unit are collected by the data acquisition system.

### BRIEF DESCRIPTION OF THE DRAWINGS

Other characteristics and advantages shall appear in the following description of embodiments of a method for detecting the fatigue damage of a hydraulic unit according to the invention, given by way of non-limiting examples, in reference to the annexed drawings wherein:
- figure 1 represents a crack (zone labelled "A") on a corner of a blade of a runner;
- figure 2 is a photograph representing strain gauges installed on the suction side of a blade of a runner;
- figure 3 represents a hydraulic unit in a perspective view, in particular, the hydraulic unit comprises a hydraulic Francis turbine and a synchronous generator;
- figure 4a is a schematic representation of a hydraulic turbine of figure 3 according to a section plan, in particular, the runner is provided with a fatigue indicator located on the internal surface of the hollow hub;
- figure 4b is another schematic representation of a hydraulic turbine of figure 3 according to a section plan, in particular, the runner is provided with a fatigue indicator located on the internal surface of the hollow hub;
- figure 4c is a schematic representation of a Pelton runner, in particular, the runner is provided with a fatigue indicator, which does not fall within the scope of the claimed invention;
- figure 5 is a perspective view of a Francis runner blade, the grey levels are associated with the magnitude of the local stresses undergone by the blade while the stream of water is flowing through the runner.
- figure 6 is a perspective view of a plate of a fatigue indicator according to the present invention, presenting a pre-initiated crack in a groove on its bottom face;
- figure 7 is a plan view of a crack gauge from Kyowa implemented in a first embodiment of the present invention;
- figure 8 is a plan view of a fatigue indicator implemented in a second embodiment of the present invention.

### DETAILLED DESCRIPTION OF SPECIFIC EMBODIMENTS

By "fatigue", it is meant a weakening of a material caused by repeatedly applied loads. It is the progressive and localized structural damage that occurs when a material is subject to cyclic loading. In particular, fatigue occurs when a material is subject to repeated loading and unloading. If the loads are above a predetermined threshold, microscopic cracks will begin to form.

In particular, in the present invention, the fatigue is detected with fatigue detectors arranged for being remotely queried, via wirings or via a wireless connection.

In the context of the present invention, the term "hydraulic channel" means a channel that is delimited by hydraulic surfaces, said hydraulic surfaces being the surfaces against which a stream of water exerts the forces when the hydraulic unit is operated in a watered mode. The hydraulic channel also comprises the pipes through which flows the stream of water flows, for example the penstock.

It is also understood that the watered surfaces of the hydraulic unit, when operated in a watered mode, are not limited to the hydraulic surfaces. In particular, the hydraulic unit comprises also other surfaces, called protected surfaces. So-called protected surfaces may either be surfaces that get wet by a portion of the stream of water, which flow rate is lower than in the hydraulic channel, for example the internal surface of the hub. Alternatively so-called protected surfaces may be surfaces that remain dry, for example on the external surface of the penstock.

The hydraulic machine can comprise a hydraulic turbine mechanically coupled to a rotating electrical machine. The rotating electrical machine may be a synchronous or an asynchronous generator or a motor-generator.

According to the claimed invention, the method is implemented for detecting fatigue damage of the runner of the hydraulic machine.

The hydraulic machine can be used in turbine mode for electrical power generation and/or in pump mode for pumping water and/or in condenser mode.

Furthermore, the fatigue indicators, depending on their sensitivity, allow to detect, in an early stage, the appearance of cracks in specific locations. It is therefore possible, depending on the fatigue damage, to plan inspection or maintenance operation of the hydraulic unit.

In particular, the method according to the present invention may be advantageously executed for monitoring the fatigue of the runner, and more particularly of the blades, before occurrence of failure and or cracks.

The invention will now be described in the context of the turbine mode. However, the skilled person, considering his general knowledge and the following description, can generalize the invention to other modes of operation of the hydraulic machine and in particular the pump and condenser modes.

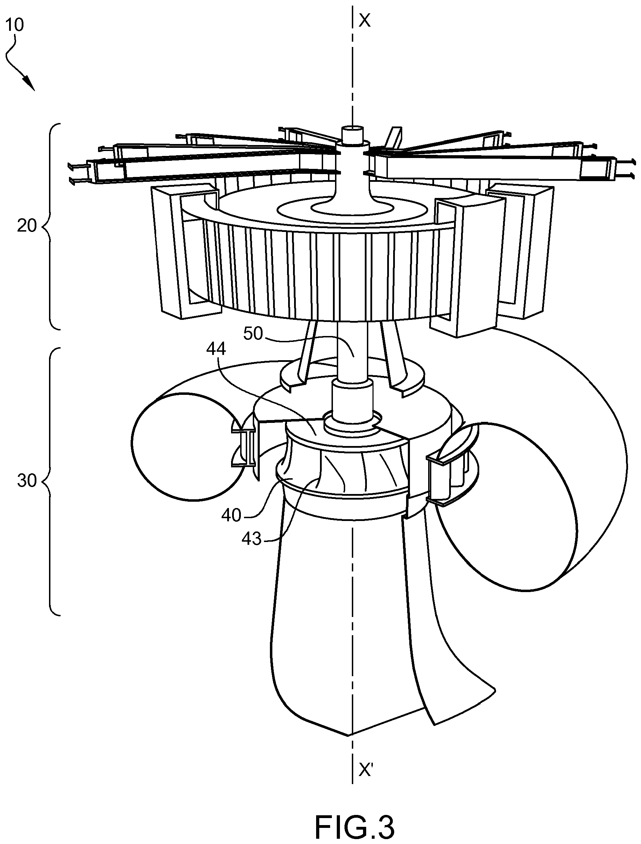

Figure 3 depicts an overall architecture of a hydraulic unit 10 according to the present invention.

The hydraulic unit 10 comprises a generator 20 connected to a grid. The generator may comprise a synchronous generator, an asynchronous generator, a motor generator.

It is understood that, without it being necessary to specify, the generator comprises a rotor arranged to rotate inside a stator whose windings are connected to the grid.

The hydraulic unit 10 further comprises a hydraulic turbine 30 provided with a runner 40 mechanically coupled to the rotor of the synchronous generator 20 via a shaft line 50 extending along a rotation axis XX'.

While in use, the runner is driven into rotation by a stream of water flowing through the runner, and in particular flowing through a hydraulic channel.

By "hydraulic channel", it is meant a flow channel through which the stream of water exerts the forces required to trigger the rotation of the runner.

In particular, the hydraulic channel is delimited by hydraulic surfaces, said hydraulic surfaces being the surfaces against which a stream of water exerts the forces when the runner is driven in rotation by said stream of water. The hydraulic channel also comprises the pipes through which flows the stream of water.

Within the runner, the hydraulic channel is delimited by surfaces of said runner 40 which are directly exposed to hydraulic perturbations stemming from the flowing of the stream of water.

The runner 40 further comprises at least one fatigue indicator F.

The at least one fatigue indicator F is remotely queried via wirings or via a wireless connection.

By "fatigue indicator", it is meant an indicator sensitive to stress cycles (i.e.: fatigue) undergone by the probed device (for example the runner) to which it is coupled. In particular, when the hydraulic unit accumulates repeated loads, on a specific location, above a given threshold, the fatigue indicator modifies its structure irreversibly. Notably and as a non-limiting example, the structural modification of the fatigue indicator involves the breaking of connections which translates into a modification of the electrical resistivity of said indicator.

In particular, the at least one fatigue indicator F is/are calibrated so that they are sensitive to the fatigue undergone on the at least one specific location.

By "sensitive", it is mean that the fatigue indicator can detect damage.

For example, the at least specific location is/are locations, called hot spot, wherein the fatigue undergone corresponds to a local maximum.

By "local maximum", it is meant that it exists a region comprising the specific location so that the mechanical stress on said specific location is above the mechanical stress on any other location of said region.

The at least one fatigue indicator F is positioned away from the at least one specific location.

It is therefore possible to remotely probe the fatigue of specific location for which access is not convenient.

The inventors have noted that the cumulative effect of repeated loads affects the runner as a whole. In particular, the loading effect on the runner, whatever the considered location, depends on the operating conditions and the mechanical characteristics of the runner. More precisely, considering said operating conditions and mechanical characteristics, the accumulated strain or stress on a particular location of the runner can be deduced from the knowledge of the accumulated strain or stress on any other location.

Therefore, a fatigue indicator located on an area provides indications of the accumulated strain or stress on other locations of the runner, and for example on specific locations of the hydraulic surfaces of the runner.

Notably, the specific locations are locations, called hot spots, wherein the mechanical stress undergone, while the runner is rotating, corresponds to a local maximum.

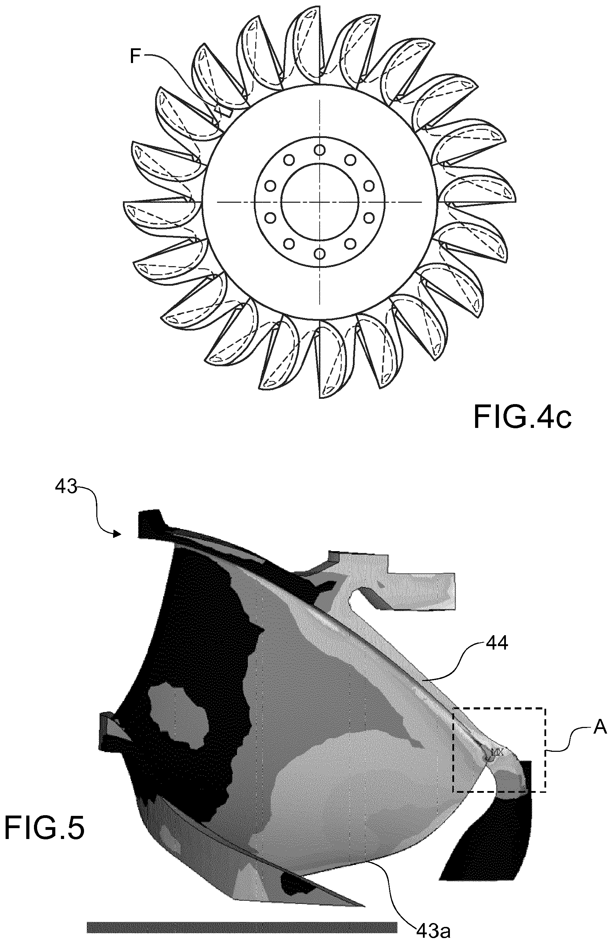

To this regard, the figure 5 is a perspective view of a Francis runner blade. The grey levels are associated with the local stress undergone by the blade while the stream of water is flowing through the runner. It can be noted in this figure 5 that the stress undergone by the blade (location A) in the corner at the intercept of the trailing edge 43a and the hollow hub 44 are quite high with respect to the rest of the blade.

The fatigue indicator may be calibrated to detect a damage on a specific location of the runner when fatigue of said specific location is above a given fatigue damage threshold.

The method can comprise the implementation of a plurality of fatigue indicators F calibrated to detect different damage magnitudes.

According to this configuration, it is possible to evaluate the magnitude of the damage undergone by the runner.

The calibration of the fatigue indicators can be based on numerical simulations. In particular, the numerical simulations can involve computational fluid dynamics for calculating pressure loading on the runner, and finite element analysis of the stress stemming from said pressure loading.

To this regard, the skill in the art can consult the document [1] cited at the end of the description.

Alternatively, the calibration of the fatigue indicators may be executed during a learning period or in a reduced scaled model of the runner.

By "reduced scale model", it is meant a laboratory hydraulic machine and whose size or footprint is advantageously reduced with respect to the hydraulic machine.

A complementary calibration, based on the material and the geometry of the fatigue indicator, may be executed to determine propagation velocity within said fatigue indicator.

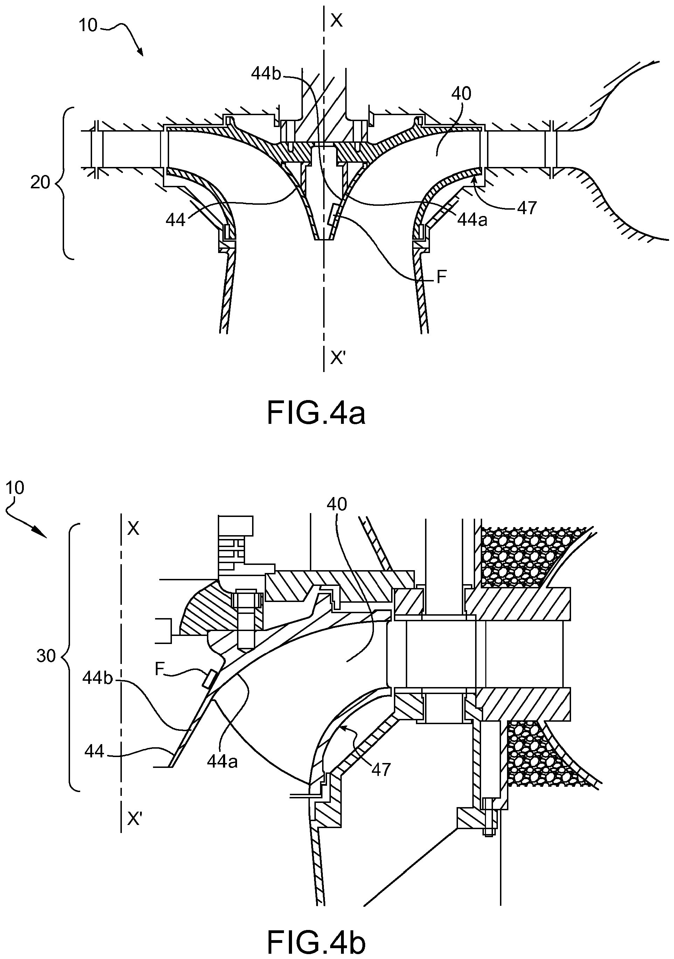

For example, the runner is a Francis runner that comprises blades 43, each having two opposite sides called, respectively, pressure side and suction side, and extending from an external surface 44a of a hollow hub 44, having for example a conical shape (figures 4a and 4b).

The blades 43 may be further secured on the periphery of the runner by a peripheral shroud 47 (figures 4a and 4b).

The hub further comprises an internal surface 44b opposite to the external surface 44a.

The hydraulic channel of a Francis runner is delimited by the pressure sides and the suction sides of the blades, and by the external surface of the hollow hub 44.

According to the claimed invention, at least one fatigue indicator is located on an internal surface 44b of the hollow hub 44, opposite to the external surface, so that said indicators are isolated from the stream of water circulating through the hydraulic channel when the hydraulic machine is in operation. For example, the fatigue indicators may be glued, welded or mechanically secured to the internal surface (figures 4a and 4b).

In an example, which does not fall within the scope of the claimed invention, illustrated in figure 4c, the runner is a Pelton runner.

The fatigue indicators, when detecting a damage above a predetermined threshold of damage, translate said damage into a variation of a physical parameter. According to one example, the physical parameter is an electrical resistance.

Alternatively, the physical parameter is a counting of an accumulated strain or stress or loading. To this regard, the fatigue indicator may be provided with a processor configured to execute the counting of the strain or the loading.

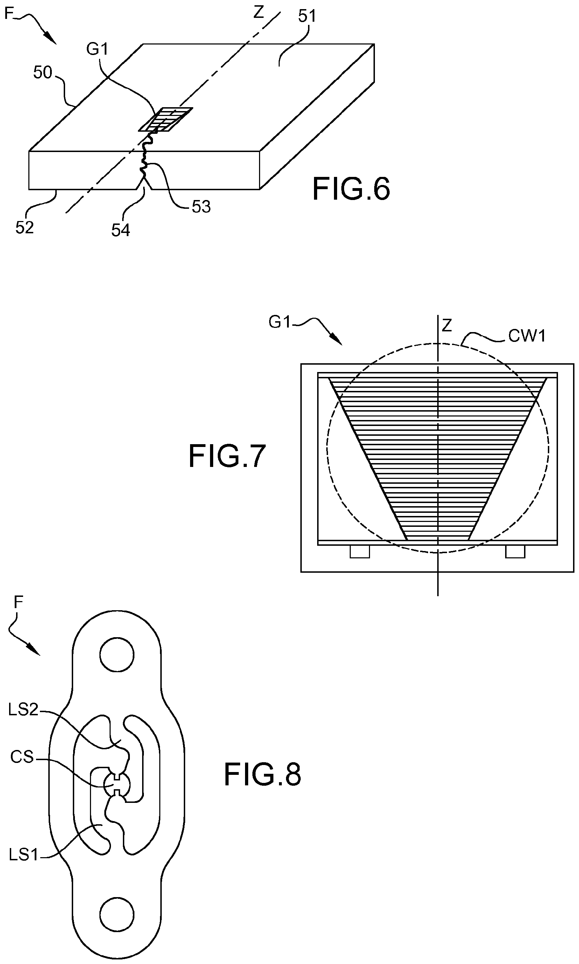

Advantageously, each fatigue indicator comprises a plate 50 having a top face 51 on which is located a crack gauge G1 (figure 6).

In particular, the plate 50 may comprise a pre-initiated crack 53 that is designed to propagate below the crack gauge G1 as soon as the predetermined threshold of fatigue is reached.

The formation of the pre-initiated crack enhances the sensitivity to stress accumulation (or fatigue) of the fatigue indicator and therefore makes it possible to anticipate at a very early stage the appearance of cracks on the specific locations.

The sensitivity of the fatigue indicator may be further enhanced by suspending the plate of said fatigue indicator on two pedestals.

It is thus possible to plan inspections and maintenance before the occurrence of major failure of the component of the hydraulic unit, and thus extend its lifetime.

By "lifetime", it is meant a time before a failure occurs on the runner under specific operating conditions.

Advantageously, the pre-initiated crack is guided in a groove formed on a bottom face of the plate opposite to the top face, and extending along a first direction Z.

According to a first embodiment of the present invention illustrated in figure 7, the crack gauge G1 may comprise an electrical resistance made of conductive wires CW1 arranged perpendicularly to the first direction Z on the top face, and designed to selectively break depending on the magnitude of fatigue damages causing the propagation of the pre-initiated crack. In other words, the number of broken conductive wires depends on the magnitude of damage detected in the specific locations.

Advantageously, conductive wires CW1 are arranged along the first direction in order of increasing length.

According to a second embodiment of the present invention illustrated in figure 8, each fatigue indicator F can comprise a central section CS connecting two lateral sections LS1 and LS2, for example, having a flat shape. The central section is a zone of weakness wherein the stress undergone by the fatigue indicator accumulates. In particular, the central section is designed to break as soon as the predetermined threshold of fatigue is reached as described in document [2] cited at the end of the description.

Whatever the embodiment considered, the method may comprise the collection of the variation of the physical parameter by a data acquisition system connected, via wirings or a wireless connection, to the at least one fatigue indicator.

In particular, the wirings may pass along the shaft line of the hydraulic unit. Optionally the wirings are housed in a groove formed along the shaft line.

In particular, the wirings may pass along the shaft line 50 of the hydraulic unit (figure 4).

Optionally the wirings are housed in a groove formed along the shaft line.

Alternatively, the shaft line 50 is a hollow shaft inside which the wiring passes.

A coupling flange (having for example a disk shape) at one end of the shaft line 50 can ensure the securing of said shaft line to the runner. In particular, the wirings can pass along a groove formed on the coupling flange for connecting the at least one fatigue indicator.

The hydraulic unit can also comprise measurement means for measuring parameters like torque fluctuations experienced by the shaft line, bearing vibration and shaft line displacement or hydraulic pressure pulsations.

These parameters define operating conditions which directly affect the lifetime of the runner, and can therefore be transferred via wirings or via a wireless connection to the data acquisition system.

The fatigue indicators installed, when located on protected areas, do not interfere with the stream of water driving into rotation the runner, so that their release is prevented.

Consequently, the fatigue indicators can be permanently installed on the runner.

Dewatering/rewatering sequence are not anymore necessary so that the cost associated with a fatigue detection of the hydraulic turbine according to the present invention is limited compared to the method known from prior art.

### REFERENCES

[1] Pierre-Yves LOWYS et. al., "hydro plant operating range extension transverse approach for increasing turbine flexibility ", hydrovision International 2014, Track H: Technical paper;
[2] EP 0 032 101.

## Claims

1. Method for detecting a fatigue undergone on at least one specific location of a hydraulic unit, wherein the fatigue undergone on the at least one specific location is detected by at least one fatigue indicator (F), said at least one fatigue indicator arranged for being remotely queried via wirings or via a wireless connection,
wherein the hydraulic unit comprises a hydraulic machine provided with a runner arranged to rotate around a rotation axis as soon as said unit is in operation, the at least one specific location being on the runner,
**characterized in that**:
- the fatigue represents an accumulation of repeated loads above a given threshold;
- the at least one fatigue indicator (F) is positioned away from the at least one specific location;
- the runner comprises blades (43), each having two opposite sides called, respectively, pressure side and suction side, and extending from an external surface (44a) of a hollow hub (44), the pressure side and the suction side of the blades forming a section of the hydraulic surfaces, the hollow hub further comprises an internal surface (44b) opposite to the external surface (44a), the at least one fatigue indicator is located on the internal surface of the hollow hub so that the at least one fatigue indicator is isolated from the stream of water or air circulating through the hydraulic channel when the hydraulic unit is in operation.

2. Method according to claim 1, wherein the at least one fatigue indicator is calibrated so that it is sensitive to the fatigue undergone on the at least one specific location, optionally wherein the at least specific location is a location, called hot spot, wherein the fatigue undergone corresponds to a local maximum.

3. Method according to claim 1 or 2, wherein the at least one fatigue indicator, when detecting a fatigue above a predetermined threshold of fatigue, translates said fatigue into a variation of a physical parameter, optionally wherein the physical parameter is an electrical resistance, or a counting of an accumulated strain or stress.

4. Method according to claim 3, wherein the at least one fatigue indicator comprises a plate having a top face on which is located a crack gauge.

5. Method according to claim 4, wherein the plate comprises a pre-initiated crack that is designed to propagate below the crack gauge as soon as the predetermined threshold of fatigue is reached, optionally wherein the pre-initiated crack is guided in a groove formed on a bottom face of the plate opposite to the top face, and extending along a first direction.

6. Method according to claim 5, wherein the crack gauge comprises an electrical resistance made of conductive wires arranged perpendicularly to the first direction on the top face, and designed to selectively, optionally successively, break depending on the magnitude of the fatigue causing the propagation of the pre-initiated crack, optionally wherein the conductive wires are arranged along the first direction in order of increasing length.

7. Method according to claim 3, wherein the at least one fatigue indicator comprises a central section connecting two lateral sections, the central section being designed to break as soon as the predetermined threshold of fatigue is reached, optionally wherein the two lateral sections have a flat shape.

8. Method according to any one of claims 3 to 7, wherein the method further comprises the collection of the variation of the physical parameter by a data acquisition system via a wireless connection, optionally wherein the operating conditions of the hydraulic unit are collected by the data acquisition system.

9. Hydraulic unit which comprises at least one fatigue indicator, the at least one fatigue indicator arranged for being remotely queried via wirings or via a wireless connection, and sensitive to a fatigue undergone on at least one specific location of the hydraulic unit,
wherein the hydraulic unit comprises a hydraulic machine provided with a runner arranged to rotate around a rotation axis as soon as said unit is in operation, the at least one specific location being on the runner,
**characterized in that**:
- the at least one fatigue indicator is sensitive to an accumulation of repeated loads above a given threshold,
- the at least one fatigue indicator (F) is positioned away from the at least one specific location,
- the runner comprises blades (43), each having two opposite sides called, respectively, pressure side and suction side, and extending from an external surface (44a) of a hollow hub (44), the pressure side and the suction side of the blades forming a section of the hydraulic surfaces, the hollow hub further comprises an internal surface (44b) opposite to the external surface (44a), the at least one fatigue indicator is located on the internal surface of the hollow hub so that the at least one fatigue indicator is isolated from the stream of water or air circulating through the hydraulic channel when the hydraulic unit is in operation.

## Patentansprüche

1. Verfahren zum Erkennen einer Ermüdung, die an mindestens einer spezifischen Stelle einer Hydraulikeinheit auftritt, wobei die Ermüdung, die an der mindestens einen spezifischen Stelle auftritt, über mindestens einen Ermüdungsindikator (F) erkannt wird, wobei der mindestens eine Ermüdungsindikator dafür eingerichtet ist, über Verdrahtungen oder über eine drahtlose Verbindung aus der Ferne abgefragt zu werden,
wobei die Hydraulikeinheit eine Hydraulikmaschine umfasst, die mit einem Läufer versehen ist, der so eingerichtet ist, dass er um eine Drehachse dreht, sobald sich die Einheit in Betrieb befindet, wobei sich die mindestens eine spezifische Stelle am Läufer befindet,
**dadurch gekennzeichnet, dass**:
- die Ermüdung eine Akkumulation von wiederholten Belastungen oberhalb einer gegebenen Schwelle darstellt;
- der mindestens eine Ermüdungsindikator (F) von der mindestens einen spezifischen Stelle entfernt positioniert ist;
- der Läufer Schaufeln (43) umfasst, die jeweils zwei gegenüberliegende Seiten aufweisen, die als Druckseite bzw. Saugseite bezeichnet werden, und sich von einer Außenfläche (44a) einer Hohlnabe (44) erstrecken, wobei die Druckseite und die Saugseite der Schaufeln einen Teil der Hydraulikflächen bilden, die Hohlnabe weiter eine Innenfläche (44b) umfasst, die der Außenfläche (44a) gegenüberliegt, der mindestens eine Ermüdungsindikator sich an der Innenfläche der Hohlnabe befindet, sodass die Ermüdungsindikatoren von dem Wasser- oder Luftstrom, der durch den Hydraulikkanal zirkuliert, wenn sich die Hydraulikeinheit in Betrieb befindet, isoliert sind.

2. Verfahren nach Anspruch 1, wobei der mindestens eine Ermüdungsindikator so kalibriert ist, dass er für die Ermüdung, die an der mindestens einen spezifischen Stelle auftritt, empfindlich ist, gegebenenfalls wobei die mindestens eine spezifische Stelle als Hotspot bezeichnete Stellen sind, an denen die auftretende Ermüdung einem lokalen Maximum entspricht.

3. Verfahren nach Anspruch 1 oder 2, wobei der mindestens eine Ermüdungsindikator, wenn er eine Ermüdung oberhalb einer vorbestimmten Ermüdungsschwelle erkennt, die Ermüdung in eine Änderung eines physikalischen Parameters übersetzt, gegebenenfalls wobei der physikalische Parameter ein elektrischer Widerstand oder eine Zählung einer akkumulierten Dehnung oder Spannung ist.

4. Verfahren nach Anspruch 3, wobei der mindestens eine Ermüdungsindikator eine Platte umfasst, die eine Oberseite aufweist, an der sich ein Rissmesser befindet.

5. Verfahren nach Anspruch 4, wobei die Platte einen vorinitiierten Riss umfasst, der so konzipiert ist, dass er sich unterhalb des Rissmessers ausbreitet, sobald die vorbestimmte Ermüdungsschwelle erreicht ist, gegebenenfalls wobei der vorinitiierte Riss in einer Nut geführt wird, die an einer der Oberseite gegenüberliegenden Unterseite der Platte gebildet ist, und sich entlang einer ersten Richtung erstreckt.

6. Verfahren nach Anspruch 5, wobei der Rissmesser einen elektrischen Widerstand umfasst, der aus leitfähigen Drähten besteht, die senkrecht zur ersten Richtung an der Oberseite eingerichtet sind, und so konzipiert sind, dass sie selektiv, gegebenenfalls nacheinander, in Abhängigkeit von der Größe der Ermüdung, die die Ausbreitung des vorinitiierten Risses verursacht, brechen, gegebenenfalls wobei die leitfähigen Drähte entlang der ersten Richtung in Reihenfolge zunehmender Länge eingerichtet sind.

7. Verfahren nach Anspruch 3, wobei der mindestens eine Ermüdungsindikator einen mittleren Teil umfasst, der zwei seitliche Teile verbindet, wobei der mittlere Teil so konzipiert ist, dass er bricht, sobald die vorbestimmte Ermüdungsschwelle erreicht ist, gegebenenfalls wobei die zwei seitlichen Teile eine flache Form aufweisen.

8. Verfahren nach einem der Ansprüche 3 bis 7, wobei das Verfahren weiter das Sammeln der Änderung des physikalischen Parameters durch ein Datenerfassungssystem über eine drahtlose Verbindung umfasst, gegebenenfalls wobei die Betriebsbedingungen der Hydraulikeinheit durch das Datenerfassungssystem gesammelt werden.

9. Hydraulikeinheit, die mindestens einen Ermüdungsindikator umfasst, wobei der mindestens eine Ermüdungsindikator dafür eingerichtet ist, über Verdrahtungen oder über eine drahtlose Verbindung aus der Ferne abgefragt zu werden, und für eine Ermüdung empfindlich ist, die an mindestens einer spezifischen Stelle der Hydraulikeinheit auftritt,
wobei die Hydraulikeinheit eine Hydraulikmaschine umfasst, die mit einem Läufer versehen ist, der so eingerichtet ist, dass er um eine Drehachse dreht, sobald sich die Einheit in Betrieb befindet, wobei sich die mindestens eine spezifische Stelle am Läufer befindet,
**dadurch gekennzeichnet, dass**:
- der mindestens eine Ermüdungsindikator für eine Akkumulation von wiederholten Belastungen oberhalb einer gegebenen Schwelle empfindlich ist,
- der mindestens eine Ermüdungsindikator (F) von der mindestens einen spezifischen Stelle entfernt positioniert ist,
- der Läufer Schaufeln (43) umfasst, die jeweils zwei gegenüberliegende Seiten aufweisen, die als Druckseite bzw. Saugseite bezeichnet werden, und sich von einer Außenfläche (44a) einer Hohlnabe (44) erstrecken, wobei die Druckseite und die Saugseite der Schaufeln einen Teil der Hydraulikflächen bilden, die Hohlnabe weiter eine Innenfläche (44b) umfasst, die der Außenfläche (44a) gegenüberliegt, der mindestens eine Ermüdungsindikator sich an der Innenfläche der Hohlnabe befindet, sodass die Ermüdungsindikatoren von dem Wasser- oder Luftstrom, der durch den Hydraulikkanal zirkuliert, wenn sich die Hydraulikeinheit in Betrieb befindet, isoliert sind.

## Revendications

1. Procédé de détection d'une fatigue subie sur au moins un emplacement spécifique d'une unité hydraulique, dans lequel la fatigue subie sur l'au moins un emplacement spécifique est détectée par au moins un indicateur de fatigue (F), ledit au moins un indicateur de fatigue étant conçu pour être interrogé à distance par le biais d'installations électriques ou par le biais d'une connexion sans fil,
dans lequel l'unité hydraulique comprend une machine hydraulique dotée d'une roue conçue pour tourner autour d'un axe de rotation dès que ladite unité est en fonctionnement, l'au moins un emplacement spécifique étant sur la roue,
**caractérisé en ce que** :
- la fatigue représente une accumulation de charges répétées au-dessus d'un seuil donné ;
- l'au moins un indicateur de fatigue (F) est positionné éloigné de l'au moins un emplacement spécifique ;
- la roue comprend des aubes (43), chacune présentant deux côtés opposés appelés, respectivement, intrados et extrados, et s'étendant depuis une surface externe (44a) d'un moyeu creux (44), l'intrados et l'extrados des aubes formant une section des surfaces hydrauliques, le moyeu creux comprend en outre une surface interne (44b) opposée à la surface externe (44a), l'au moins un indicateur de fatigue est situé sur la surface interne du moyeu creux de sorte que le au moins un indicateur de fatigue soit isolé du courant d'eau ou d'air circulant à travers le canal hydraulique lorsque l'unité hydraulique est en fonctionnement.

2. Procédé selon la revendication 1, dans lequel l'au moins un indicateur de fatigue est étalonné de manière à être sensible à la fatigue subie sur l'au moins un emplacement spécifique, éventuellement dans lequel l'au moins un emplacement spécifique est un emplacement, appelé point chaud, dans lequel la fatigue subie correspond à un maximum local.

3. Procédé selon la revendication 1 ou 2, dans lequel l'au moins un indicateur de fatigue, lors de la détection d'une fatigue au-dessus d'un seuil de fatigue prédéterminé, traduit ladite fatigue en une variation d'un paramètre physique, éventuellement dans lequel le paramètre physique est une résistance électrique, ou un décompte de contrainte ou d'effort accumulé.

4. Procédé selon la revendication 3, dans lequel l'au moins un indicateur de fatigue comprend une plaque présentant une face supérieure sur laquelle est située une jauge de fissure.

5. Procédé selon la revendication 4, dans lequel la plaque comprend une fissure préinitiée qui est conçue pour se propager sous la jauge de fissure dès que le seuil de fatigue prédéterminé est atteint, éventuellement dans lequel la fissure préinitiée est guidée dans une rainure formée sur une face inférieure de la plaque opposée à la face supérieure, et s'étendant le long d'une première direction.

6. Procédé selon la revendication 5, dans lequel la jauge de fissure comprend une résistance électrique composée de fils conducteurs agencés perpendiculairement à la première direction sur la face supérieure, et conçus pour se rompre sélectivement, éventuellement successivement, en fonction de l'importance de la fatigue provoquant la propagation de la fissure préinitiée, éventuellement dans lequel les fils conducteurs sont agencés le long de la première direction dans un ordre de longueur croissante.

7. Procédé selon la revendication 3, dans lequel l'au moins un indicateur de fatigue comprend une section centrale raccordant deux sections latérales, la section centrale étant conçue pour se rompre dès que le seuil de fatigue prédéterminé est atteint, éventuellement dans lequel les deux sections latérales présentent une forme plate.

8. Procédé selon l'une quelconque des revendications 3 à 7, dans lequel le procédé comprend en outre la collecte de la variation du paramètre physique par un système d'acquisition de données par le biais d'une connexion sans fil, éventuellement dans lequel les conditions de fonctionnement de l'unité hydraulique sont collectées par le système d'acquisition de données.

9. Unité hydraulique qui comprend au moins un indicateur de fatigue, l'au moins un indicateur de fatigue étant conçu pour être interrogé à distance par le biais d'installations électriques ou par le biais d'une connexion sans fil, et sensible à une fatigue subie sur au moins un emplacement spécifique de l'unité hydraulique,
dans laquelle l'unité hydraulique comprend une machine hydraulique dotée d'une roue conçue pour tourner autour d'un axe de rotation dès que ladite unité est en fonctionnement, l' au moins un emplacement spécifique étant sur la roue,
**caractérisée en ce que** :
- l'au moins un indicateur de fatigue est sensible à une accumulation de charges répétées au-dessus d'un seuil donné,
- l'au moins un indicateur de fatigue (F) est positionné éloigné de l'au moins un emplacement spécifique,
- la roue comprend des aubes (43), chacune présentant deux côtés opposés appelés, respectivement, intrados et extrados, et s'étendant depuis une surface externe (44a) d'un moyeu creux (44), l'intrados et l'extrados des aubes formant une section des surfaces hydrauliques, le moyeu creux comprend en outre une surface interne (44b) opposée à la surface externe (44a), l'au moins un indicateur de fatigue est situé sur la surface interne du moyeu creux de sorte que l'au moins un indicateur de fatigue soit isolé du courant d'eau ou d'air circulant à travers le canal hydraulique lorsque l'unité hydraulique est en fonctionnement.
